# EUROPÄISCHE PATENTSCHRIFT

(11) **EP 0 575 743 B1**
(45) Veröffentlichungstag und Bekanntmachung des Hinweises auf die Patenterteilung: **05.02.1997**
(21) Anmeldenummer: 93107977.6
(22) Anmeldetag: 17.05.1993
(51) Int. Cl.: F16L 59/04, F16L 59/06

(54) **Verfahren zur Herstellung von Elementen zur Wärmeisolation und nach dem Verfahren hergestellte Elemente**
Method for the fabrication of heat insulating elements and elements obtained thereby
Procédé pour la fabrication d'éléments d'isolation thermique et éléments fabriqués selon ce procédé

(30) Priorität: 18.05.1992 DE 4216411
(43) Veröffentlichungstag der Anmeldung: 29.12.1993
(73) Patentinhaber: Schilf, Lothar, D-2816 Kirchlinteln (DE)
(72) Erfinder: Schilf, Lothar, D-2816 Kirchlinteln (DE)
(74) Vertreter: Eisenführ, Speiser & Partner

(56) Entgegenhaltungen:
- EP-A- 0 017 095
- EP-A- 0 106 103
- EP-A- 0 260 699
- EP-A- 0 297 061
- US-A- 4 486 482

## Beschreibung

Die Erfindung betrifft ein Verfahren zur Herstellung von Elementen zur Wärmeisolation, bei dem poröses, pulverförmiges Isoliermaterial thermisch entgast wird und in eine evakuierte Hülle eingefüllt wird, die anschließend vakuumdicht verschlossen wird.

Die Erfindung betrifft ferner ein nach einem derartigen Verfahren hergestelltes Element zur Wärmeisolation.

Aus der EP-0 017 095 ist ein Verfahren zur Herstellung von Elementen zur innenliegenden Wärmeisolation von Hochdruckbehältern oder Röhren bekannt, bei dem poröses, pulverförmiges Isoliermaterial in eine vakuumdichte Hülle eingefüllt wird und beim bzw. nach dem Einfüllen zusammen mit der Hülle gasfrei ausgeheizt wird, wobei die Hülle anschließend evakuiert und dann vakuumdicht verschlossen wird.

Es hat sich bei diesem bekannten Verfahren herausgestellt, daß die Entgasung des pulverförmigen Isoliermaterials vorteilhafterweise vor dem Einfüllen in die Hülle, in einem separaten Vakuumtrockner durchgeführt wird, um eine kontinuierliche industrielle Produktionsweise der Wärmeisolationselemente zu ermöglichen. Anschließend wird das entgaste Isoliermaterial in die evakuierte Hülle eingefüllt, die dann vakuumdicht verschlossen wird. Bei diesem Verfahrensablauf ist es nachteilig, daß die Hülle selbst keiner thermischen Entgasung mehr unterzogen ist, daß also die Hülle nach dem Verschließen im Innenraum entgast und dadurch das ursprüngliche Vakuum verschlechtert. Dies kann, je nach Oberflächenqualität der dem Vakuumraum zugewandten Flächen oder Flächenabschnitten der Vakuumhülle, bis hin zu einer derartigen Verschlechterung des Vakuums führen, daß die Funktion der hocheffizienten Wärmedämmung schon nach kurzer Lebensdauer nicht mehr erfüllt wird. Dies gilt insbesondere für solche Anwendungen, bei denen die Wärmedämmung bzw. Teile davon während des Betriebes Temperaturen oberhalb der normalen Raumtemperatur ausgesetzt werden. Außerdem gibt auch das thermisch entgaste Isoliermaterial in der Hülle Restverunreinigungen ab, wodurch das Vakuum in der Hülle, und damit die Isoliereigenschaft der Isolationselemente verschlechtert wird.

Aus der US-A-4 486 482 ist ein Element zur Wärmeisolation bekannt, das Gettermaterial in der Hülle enthält.

Aufgabe der Erfindung ist, das Verfahren der eingangs genannten Art derart weiterzubilden, daß die hergestellten Elemente verbesserte thermische Isolationseigenschaften - insbesondere auch bei langer Benutzungsdauer - aufweisen.

Diese Aufgabe wird bei dem Verfahren der eingangs genannten Art erfindungsgemäß dadurch gelöst, daß dem Isoliermaterial vor dem Verschließen der Hülle ein Gettermaterial beigemischt wird.

Diese Aufgabe wird ferner durch Wärmeisolationselemente gelöst, die eine gasdicht verschlossene Hülle und thermisch entgastes, poröses, pulverförmiges Isoliermaterial in der Hülle enthalten, wobei dem in der Hülle befindlichem Isoliermaterial Gettermaterial beigemischt ist.

Die Vorteile der Erfindung liegen insbesondere darin, daß zusammen mit dem entgasten Isoliermaterial auch Gettermaterial in die Hülle eingefüllt wird. Wenn dann nach dem Verschließen der Hülle die Hüllenwand und/oder das Isoliermaterial Verunreinigungen abgeben, so werden diese Partikel sich an dem Gettermaterial adsorbieren und daher das Vakuum innerhalb der Hülle nicht oder nur unwesentlich beeinträchtigen. Die Erhaltung eines ausreichenden Vakuums stellt sicher, daß die freie Weglänge der Restgase wesentlich größer als die Porenweite des porösen Isoliermaterials ist, so daß die Wärmeleitfähigkeit im Inneren der Hülle gering bleibt.

Besonders bevorzugt ist das Gettermaterial pulverförmig oder pelettförmig ausgebildet, es enthält Molekularsieb und/oder Zeolithmaterial, bevorzugt auch Metall-Legierungen.

Das Gettermaterial wird besonders bevorzugt im Isoliermaterial homogen verteilt, es wird im Isoliermaterial besonders bevorzugt vor dem thermischen Entgasen beigemischt, so daß das Gettermaterial ebenfalls eine thermische Entgasung erfährt und dann in den Wärmeisolationselementen eine besonders gute Getterwirkung entfalten kann.

Als poröses, pulverförmiges Isoliermaterial wird bevorzugt natürliche oder synthetische Kieselgur verwendet, die eine geringe eigene Wärmeleitfähigkeit besitzt, nach außen offene kapillarförmige Poren enthält, und deren einzelne Teilchen eine stark unregelmäßige Struktur besitzen, z.B. sternförmig, lanzettförmig, kugelförmig etc. sind. Die Teilchengröße dieses Materials liegt bevorzugt im Bereich von 1 bis etwa 100 µm, die Porengröße liegt im Bereich einiger µm. Dieses Material besitzt alle Eigenschaften, die zur kostengünstigen Herstellung von Wärmeisolationselementen höchster Qualität und langer Lebensdauer sowie großer Maßhaltigkeit erforderlich sind.

Vorteilhafte Weiterbildungen der Erfindung sind durch die Merkmale der Unteransprüche gekennzeichnet.

Im folgenden wird eine Ausführungsform der Erfindung anhand der Zeichnungen näher erläutert. Es zeigen:
- Fig. 1: Eine schematische Darstellung des erfindungsgemäßen Verfahrens; und
- Fig. 2: einen Querschnitt durch ein plattenförmiges Wärmeisolationselement.

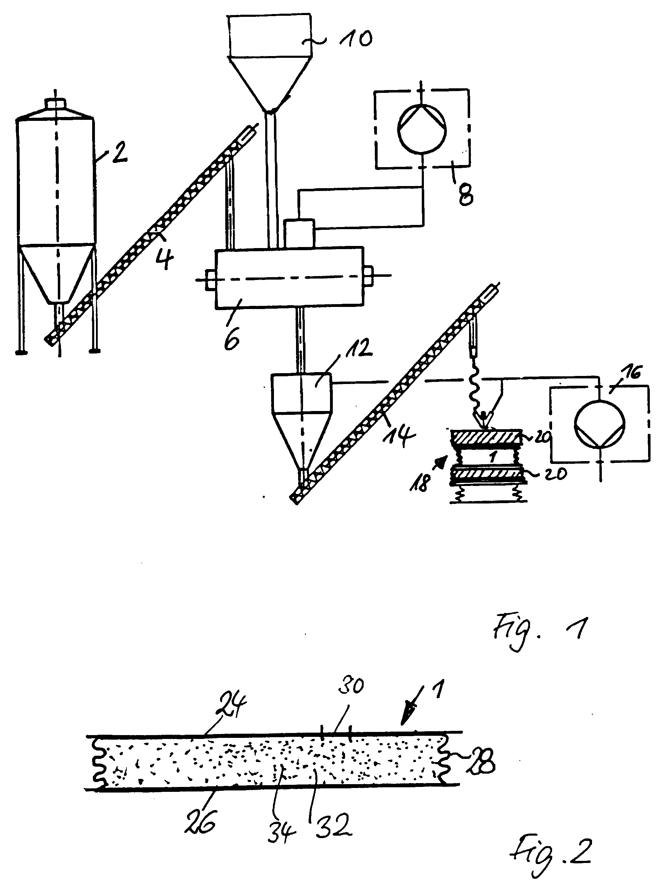

Figur 1 zeigt den schematischen Verfahrensablauf zur Herstellung eines Flachelements zur Wärmeisolation. Aus einem Vorratsbehälter 2 wird poröses, pulverförmiges Isoliermaterial, z.B. Kieselgur über eine Förderschnecke 4 einem Vakuumtrockner 6 zugeführt. Das Isoliermaterial wird im Vakuumtrockner 6 von einem ersten Vakuumpumpstand 8 entgast und von einer (nicht dargestellten) Heizvorrichtung dabei beheizt, damit eine wirksame Entgasung des Isoliermaterials, d.h. eine Abgabe der an der Isoliermaterial-Oberfläche absorbierten Verunreinigungen erfolgen kann.

Aus einem zweiten Vorratsbehälter 10 wird dem Vakuumtrockner 6 Gettermaterial z.B. pulver- oder pelletförmiges Molekularsieb, Zeolithmaterial und/oder Metall-Legierungen, zugeführt. In dem Vakuumtrockner 6 wird das Gettermaterial mit dem Isoliermaterial homogen vermischt und ebenfalls thermisch entgast.

Vom Vakuumtrockner 6 wird das Gemisch aus Isoliermaterial und Gettermaterial über einen unter Vakuum stehenden Zwischenbehälter 12 und eine ebenfalls unter Vakuum stehende Fördereinrichtung 14 einer Befüllstation 18 zugeführt und unter Vakuum in die bereits vorevakuierte Hülle 1 eines Isolationselements eingefüllt. In der dargestellten Ausführungsform besteht die Hülle aus einem Deckblech 24, einem Bodenblech 26 und einem umlaufenden Faltenbalg 28, vergleiche insbesondere Figur 2. In der Befüllstation 18 ist die Hülle 1, die vom Förderband 14 das Gemisch aus Isoliermaterial und Gettermaterial erhält, ständig mit einem zweiten Vakuumpumpstand 16 verbunden, der die Hülle vorevakuiert und während des gesamten Befüllungsvorganges evakuiert hält. Nach dem Befüllen wird die Hülle von dem Vakuumpumpstand 16 getrennt und mit einem geeigneten Verschluß 20 vakuumdicht verschlossen.

Figur 2 zeigt einen Querschnitt durch ein plattenförmiges Wärmeisolationselement. Die Hülle 1 besteht aus einem Deckblech 24, einem Bodenblech 26 und einem umlaufenden Faltenbalg 28, der Deckblech und Bodenblech vakuumdicht miteinander verbindet. In dem Deckblech ist eine Einfüllöffnung 30 vorgesehen, die mit einem geeigneten Verschluß (nicht dargestellt) vakuumdicht verschlossen werden kann, nachdem in die Hülle 1 ein pulverförmiges Gemisch 32 aus Isoliermaterial und Gettermaterial eingefüllt ist.

## Patentansprüche

1. Verfahren zur Herstellung von Elementen zur Wärmeisolation, bei dem poröses, pulverförmiges Isoliermaterial thermisch entgast wird und in eine evakuierte Hülle eingefüllt wird, die anschließend vakuumdicht verschlossen wird,
dadurch gekennzeichnet, daß dem Isoliermaterial vor dem Verschließen der Hülle ein Gettermaterial beigemischt wird.

2. Verfahren nach Anspruch 1,
dadurch gekennzeichnet, daß das Gettermaterial dem Isoliermaterial vor dem Einfüllen in die Hülle beigemischt wird.

3. Verfahren nach Anspruch 1,
dadurch gekennzeichnet, daß das Gettermaterial dem Isoliermaterial vor dem thermischen Entgasen beigemischt wird.

4. Verfahren nach einem der vorstehenden Ansprüche,
dadurch gekennzeichnet, daß das Gettermaterial im Isoliermaterial homogen verteilt wird.

5. Verfahren nach einem der vorstehenden Ansprüche,
dadurch gekennzeichnet, daß das Gettermaterial pulverförmiges oder pelletförmiges Molekularsieb ist.

6. Verfahren nach einem der vorstehenden Ansprüche,
dadurch gekennzeichnet, daß das Gettermaterial Zeolithmaterial enthält.

7. Verfahren nach einem der vorstehenden Ansprüche,
dadurch gekennzeichnet, daß das Gettermaterial eine Metall-Legierung enthält.

8. Element zur Wärmeisolation, mit einer gasdicht verschlossenen Hülle, mit thermisch entgastem, porösem, pulverförmigem Isoliermaterial in der Hülle,
dadurch gekennzeichnet, daß dem Isoliermaterial (32) in der Hülle (1) Gettermaterial (34) beigemischt ist.

## Claims

1. A process for producing elements for thermal insulation, in which porous pulverulent insulating material is thermally degassed and is put into an evacuated sheath which is subsequently sealed in vacuum-tight manner, characterized in that before the sheath is sealed a getter material is mixed into the insulating material.

2. A process according to Claim 1, characterized in that the getter material is mixed into the insulating material before it is put into the sheath.

3. A process according to Claim 1, characterized in that the getter material is mixed into the insulating material before the thermal degassing is carried out.

4. A process according to one of the preceding claims, characterized in that the getter material is distributed homogeneously in the insulating material.

5. A process according to one of the preceding claims, characterized in that the getter material is pulverulent or pelletized molecular sieve.

6. A process according to one of the preceding claims, characterized in that the getter material contains zeolite material.

7. A process according to one of the preceding claims, characterized in that the getter material contains a metal alloy.

8. An element for thermal insulation, having a sheath which is sealed in gas-tight manner, having thermally degassed porous pulverulent insulating material in the sheath, characterized in that getter material (34) is mixed into the insulating material (32) in the sheath (1).

## Revendications

1. Procédé de fabrication d'éléments d'isolation thermique, dans lequel un matériau isolant pulvérulent poreux est dégazé thermiquement et introduit dans un manchon sous vide qui est ensuite fermé de manière étanche au vide, caractérisé en ce qu'un matériau getter est ajouté au matériau isolant avant la fermeture du manchon.

2. Procédé selon la revendication 1, caractérisé en ce que le matériau getter est ajouté au matériau isolant avant son introduction dans le manchon.

3. Procédé selon la revendication 1, caractérisé en ce que le matériau getter est ajouté au matériau isolant avant le dégazage thermique.

4. Procédé selon l'une des revendications précédentes, caractérisé en ce que le matériau getter est réparti de manière homogène dans le matériau isolant.

5. Procédé selon l'une des revendications précédentes, caractérisé en ce que le matériau getter est un tamis moléculaire sous forme de poudre ou de granulés.

6. Procédé selon l'une des revendications précédentes, caractérisé en ce que le matériau getter contient un matériau zéolitique.

7. Procédé selon l'une des revendications précédentes, caractérisé en ce que le matériau getter contient un alliage métallique.

8. Elément d'isolation thermique, comprenant un manchon qui est fermé de manière étanche aux gaz et dans lequel est introduit un matériau isolant, poreux, pulvérulent et dégazé thermiquement, caractérisé en ce qu'un matériau getter (34) est ajouté au matériau isolant (32) introduit dans le manchon (1).
